# EUROPEAN PATENT APPLICATION

(11) **EP 2 448 282 A1**
(43) Date of publication of application: **02.05.2012**
(21) Application number: 11183205.1
(22) Date of filing: 28.09.2011
(51) Int. Cl.: H04N 13/04

(54) **3D glasses, 3D display apparatus having the same and control method thereof**

(30) Priority: 01.11.2010 KR 20100107630
(71) Applicant: Samsung Electronics Co., Ltd., Suwon-si, Gyeonggi-do 442-742 (KR)
(72) Inventor: Min, Kwan-sik, Gyeonggi-do (KR); Kim, Da-hye, Gyeonggi-do (KR)
(74) Representative: Fearnside, Andrew Simon

(57) **Abstract**

A 3D display apparatus capable of watching 3D images of both an active manner and a passive manner using 3D glasses is provided. The 3D display apparatus includes a 3D panel which displays a 3D image, a first circular polarization film which is attached to a front side of the 3D panel and converts the 3D image to a circular polarization component by retarding a phase, and 3D glasses including a second circular polarization film which converts the circular polarization component converted by the first circular polarization film to a linear polarization component by retarding a phase, a liquid crystal unit which allows the linear polarization component to pass or isolates the linear polarization component from passing based on a state of the power, and a linear polarization plate which allows the linear polarization component to pass or isolates the linear polarization component from passing based on a direction of the linear polarization component.

## Description

### CROSS-REFERENCE TO RELATED APPLICATION

This application claims priority from Korean Patent Application No. 10-2010-0107630, filed on November 1, 2010, in the Korean Intellectual Property Office, the disclosure of which is incorporated herein by reference in its entirety.

### BACKGROUND

### Field

Apparatuses and methods consistent with exemplary embodiments relate to three-dimensional (3D) glasses, a 3D display apparatus having the same, and a control method thereof, and preferably more particularly, to 3D glasses usable in an active manner and a passive manner, a 3D display apparatus having the same, and a control method thereof.

### 2. Description of the Related Art

A 3D image is made based on the principle of stereo image sensing by two eyes. Binocular parallax occurring due to a lateral distance between a person's two eyes separated in a certain distance is the most important factor for producing a 3D effect. In the related art, the demand for 3D display apparatuses that provide a stereoscopic image using binocular parallax exists in various fields, such as medical applications, games, advertisement, education applications, and military training.

With the development of high resolution televisions, related art stereoscopic televisions providing stereoscopic images are used.

To watch a 3D image through the panel of related art 3D display apparatuses, either 3D glasses using the operation of the LCD in an active manner or 3D glasses using a polarization film attached with a linear polarization film or a circular polarization film in a passive manner are used, individually.

In the active manner, the left eye image and the right eye image are alternately outputted on the panel, and the LCD of the 3D glasses is activated to separate the left eye image and the right eye image in synchronization with the output of the panel, thereby embodying a 3D image. Unlike the 3D glasses of the active manner, the passive manner does not require the LCD. Instead, the left eye image and the right eye image are separated on a vertical line by utilizing a polarization film attached to the front side of the panel and a polarization film attached to the 3D glasses, thereby embodying a 3D image.

However, the related art 3D glasses are not compatible with the 3D display apparatus of the active manner and the 3D display apparatus of the passive manner due to the difference between the display manners of the panel.

### SUMMARY

According to the present invention there is provided an apparatus and method as set forth in the appended claims. Other features of the invention will be apparent from the dependent claims, and the description which follows.

Exemplary embodiments address at least the above problems and/or disadvantages and other disadvantages not described above. Also, the exemplary embodiment is not required to overcome the disadvantages described above, and an exemplary embodiment may not overcome any of the problems described above.

Exemplary embodiments provide 3D glasses compatible with 3D glasses of an active manner and 3D glasses of a passive manner, a 3D display apparatus including the same, and a control method thereof.

According to an aspect of exemplary embodiment, there is provide 3D glasses including a second circular polarization film that converts a 3D image of a circular polarization component to a linear polarization component by retarding a phase, a liquid crystal unit which either allows the linear polarization component to pass or isolates the linear polarization component from passing in accordance with the state of the power, and a linear polarization plate which either allows the linear polarization component to pass or isolates the linear polarization component from passing in accordance with a direction of the linear polarization component passed through the liquid crystal unit.

The 3D image of the circular polarization component may obtain a circular polarization component via a first circular polarization film attached to a front side of the 3D display apparatus.

The first circular polarization film may be a circular polarization film that induces phase retardation of λ/4, and the second circular polarization film may be a circular polarization film that induces phase retardation of -λ/4.

The difference between an optical axis of the first circular polarization film and an optical axis of the second circular polarization film may be 90 degrees.

The difference between a rubbing direction of the liquid crystal unit and an optical axis of the second circular polarization film may be 45 degrees.

The linear polarization plate may be a horizontal linear polarization plate.

The liquid crystal unit may not include other linear polarization plates, and the liquid crystal unit and the second circular polarization film may not include other linear polarization plates therebetween.

The liquid crystal unit may operate in synchronization with the 3D panel, and supply the power alternately to the left eye side or the right eye side of the 3D glasses in accordance with the left eye image or the right eye image of the 3D image.

The first circular polarization film may be a patterned circular polarization film.

The liquid crystal unit may continuously apply a voltage to only one side of the left eye side or the right eye side of the 3D glasses while the other side of the left eye side or the right eye side may be not applied with the voltage.

According to an aspect of another exemplary embodiment, there is provided a 3D display apparatus having 3D glasses, the 3D display apparatus including a 3D panel which displays a 3D image, a first circular polarization film attached to a front side of the 3D panel and converts the 3D image to a circular polarization component by retarding a phase, and 3D glasses for watching the 3D image, wherein the 3D glasses comprises a second circular polarization film which converts the circular polarization component converted by the first circular polarization film to a linear polarization component by retarding a phase, a liquid crystal unit which either allows the linear polarization component to pass or isolates the linear polarization component from passing in accordance with the state of the power, and a linear polarization plate which either allows the linear polarization component to pass or isolates the linear polarization component from passing in accordance with a direction of the linear polarization component passed through the liquid crystal unit.

The first circular polarization film may be a circular polarization film that induces phase retardation of λ/4, and the second circular polarization film may be a circular polarization film that induces phase retardation of -λ/4.

The difference between an optical axis of the first circular polarization film and an optical axis of the second circular polarization film may be 90 degrees.

The difference between a rubbing direction of the liquid crystal unit and an optical axis of the second circular polarization film may be 45 degrees.

The linear polarization plate may be a horizontal linear polarization plate.

The liquid crystal unit may not include other linear polarization plates, and the liquid crystal unit and the second circular polarization film may not include other linear polarization plates therebetween.

The liquid crystal unit may operate in synchronization with the 3D panel, and supply the power alternately to the left eye side or the right eye side of the 3D glasses in accordance with the left eye image or the right eye image of the 3D image.

The first circular polarization film may be a patterned circular polarization film.

The liquid crystal unit may continuously apply a voltage to only one side of the left eye side or the right eye side of the 3D glasses while the other side of the left eye side or the right eye side may be not applied with the voltage.

According to an aspect of another exemplary embodiment, there is provided a method for controlling a 3D display apparatus, the method including converting an image displayed through a 3D panel to a circular polarization component by retarding a phase using a first circular polarization film attached to a front side of the 3D panel, converting the converted circular polarization component to a linear polarization component by retarding a phase using a second circular polarization film of 3D glasses, allowing the linear polarization component to pass or isolating the converted linear polarization component from passing in accordance with the state of the power using a liquid crystal unit of the 3D glasses, and allowing the linear polarization component to pass or isolating the linear polarization component from passing in accordance with a direction of the passed linear polarization component using a linear polarization plate of the 3D glasses.

The first circular polarization film may be a circular polarization film that induces phase retardation of λ/4, and the second circular polarization film may be a circular polarization film that induces phase retardation of -λ/4.

In allowing the linear polarization component to pass or isolating the linear polarization component from passing, the liquid crystal unit may operate in synchronization with the 3D panel and supply the power alternately to the left eye side or the right eye side of the 3D glasses in accordance with the left eye image or the right eye image of the 3D image.

In allowing the linear polarization component to pass or isolating the linear polarization component from passing, the liquid crystal unit may continuously apply a voltage to only one side of the left eye side or the right eye side of the 3D glasses while the other side of the left eye side or the right eye side may be not applied with the voltage.

According to an aspect of another exemplary embodiment, there is provided an apparatus that includes a panel that receives a 3D image and processes a left eye image and a right eye image to generate a circular polarization component, and a display device that receives and processes the left eye image and the right eye image to generate a 3D output, the display device includes a polarizer that converts the circular polarization component to a linear polarization component, selectively passes the linear polarization component based on a power state, and generates an output based on a direction of the selectively passed linear polarization component.

### BRIEF DESCRIPTION OF THE DRAWINGS

The above and/or other aspects will be more apparent by describing exemplary embodiments with reference to the accompanying drawings, in which:

FIG. 1 illustrates a 3D display apparatus according to an exemplary embodiment;

FIG. 2 illustrates a panel of a 3D display apparatus in an active manner according to an exemplary embodiment of FIG. 1;

FIG. 3 illustrates a panel of a 3D display apparatus in a passive manner according to an exemplary embodiment of FIG. 1;

FIG. 4 illustrates 3D glasses of a 3D display apparatus according to an exemplary embodiment of FIG. 1;

FIGS. 5A and 5B illustrate an operation of a 3D display apparatus in the active manner according to an exemplary embodiment of FIG. 1;

FIG. 6 illustrates an operation of a 3D display apparatus in the passive manner according to an exemplary embodiment of FIG. 1; and

FIG. 7 is a flowchart depicting a method for controlling a 3D display apparatus according to an exemplary embodiment.

### DETAILED DESCRIPTION OF EXEMPLARY EMBODIMENTS

Exemplary embodiments will now be described in greater detail with reference to the accompanying drawings. In the following description, the same drawing reference numerals are used for the same elements even in different drawings. The matters defined in the description, such as detailed construction and elements, are provided to assist in a comprehensive understanding of the inventive concept. Thus, it is apparent that the exemplary embodiment can be carried out without those specifically defined matters. Also, well-known functions or constructions are not described in detail since they would obscure the invention with unnecessary detail.

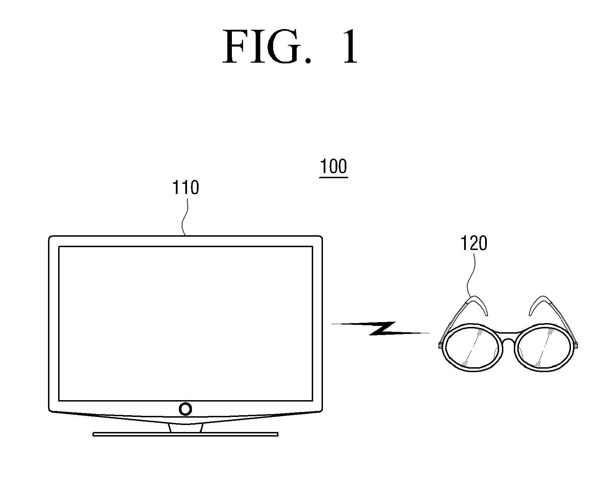

FIG. 1 illustrates a 3D display apparatus 100 according to an exemplary embodiment. As shown in FIG. 1, the 3D display apparatus 100 includes a 3D panel 110 displaying a 3D image and 3D glasses 120 for viewing the 3D image.

The 3D panel 110 may display only a 3D image or may display both 2D and 3D images.

If the 3D panel 110 displays a 2D image, a related art method for 2D panel display may be used. If the 3D panel 110 displays a 3D image, a 3D image received from an imaging apparatus such as a camera or a 3D image which is captured by a camera, edited/processed in the broadcasting station, and then transmitted from the broadcasting station, is received to be processed and displayed. The 3D panel 110 processes the left eye image and the right eye image by referring to the format of the 3D image in either an active manner displaying alternately the left eye image and the right eye image to give the stereoscopic effect to the viewer, or a passive manner spatially distinguishing and displaying the left eye image and the right eye image.

The 3D glasses 120 may display the images of the active and passive manners.

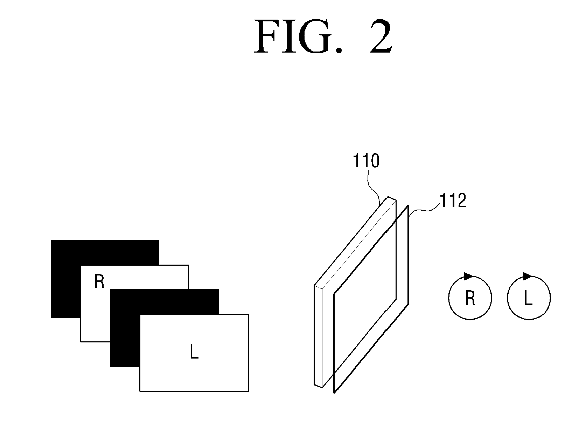

A 3D display apparatus according to an exemplary embodiment is described with reference to FIGS. 2 to 4.

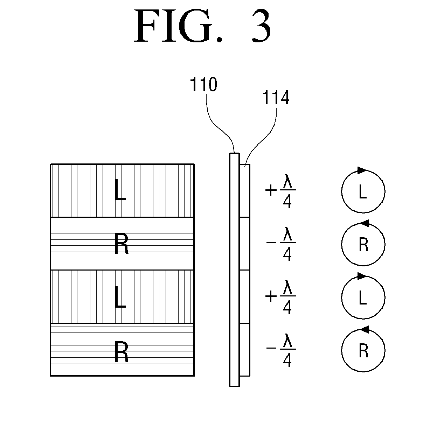

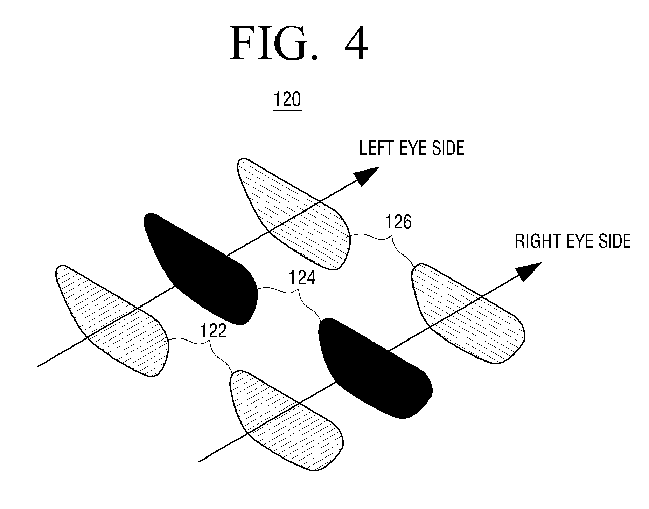

FIG. 2 illustrates a panel of a 3D display apparatus in an active manner according to an exemplary embodiment of FIG. 1. FIG. 3 is illustrated to describe a panel of a 3D display apparatus in a passive manner according to an exemplary embodiment of FIG. 1. FIG. 4 is illustrated to describe 3D glasses of a 3D display apparatus according to an exemplary embodiment of FIG. 1.

In an exemplary active manner illustrated in FIG. 2, the front side of the 3D panel 110 displaying, alternately, a left eye image and a right eye image is attached to a first circular polarization film 112 which converts a 3D image to a circular polarization component by retarding a phase.

The first circular polarization film 112 may be a circular polarization film that retards a phase by λ/4.

In other words, in the active manner, the left eye image or the right eye image displayed on the 3D panel passes through the first circular polarization film and is converted to a left eye image or a right eye image having a circular polarization component in the same direction.

In a passive manner as illustrated in FIG. 3, the front side of the 3D panel 110 displaying the spatially separated left eye image and the right eye image is attached with a first circular polarization film 114 which converts the 3D images to circular polarization components having an opposite direction to each other by retarding a phase.

The first circular polarization film 114 in the passive manner may be a patterned circular polarization film for retarding a phase of the spatially separated left eye image and the right eye image.

The patterned circular polarization film may be patterned by a circular polarization film inducing phase retardation of +λ/4 or a circular polarization film inducing phase retardation of -λ/4 in accordance with the left eye image or the right eye image.

In the passive manner, for example, if the left eye image displayed on the 3D panel is converted to a circular polarization component after passing through a circular polarization film which retards a phase by +λ/4, the right eye image is converted to a circular polarization component after passing through a circular polarization film which retards a phase by -λ/4.

In other words, the circular polarization components of the left eye image and the right eye image are the circular polarization components having an opposite directional components to each other as illustrated in FIG. 3.

FIGS. 2 to 3 schematically illustrate the 3D panel and the first circular polarization film to describe the display manner of the images on the 3D panel such as in the active manner or the passive manner, however, those skilled in this art may know that the actual shapes may be formed differently, and other structures may be used to perform the these functions as would be known by those skilled in the art.

The 3D glasses of the 3D display apparatus according to an exemplary embodiment may display the images of both the active manner and the passive manner, and the 3D glasses 120 of FIG. 4 include a second circular polarization film 122, a liquid crystal unit 124, and a linear polarization plate 126 in the left eye side and the right eye side, respectively.

The second circular polarization film 122 converts the circular polarization component converted by the first circular polarization film to a linear polarization component by retarding a phase.

The difference between an optical axis of the first circular polarization film and an optical axis of the second circular polarization film may be substantially 90 degrees.

The first circular polarization film may be a circular polarization film inducing phase retardation of +λ/4 whereas the second circular polarization film may be a circular polarization film inducing phase retardation of -λ/4.

In the active manner, the left eye image or the right eye image is converted to an image of a linear polarization component having the same component as the image initially displayed on the 3D panel after passing through the first and the second circular polarization films. In the passive manner, the left eye image or the right eye image is converted to an image of a linear polarization component having an opposite direction to each other after passing through the second circular polarization film.

The liquid crystal unit 124 allows the linear polarization component converted by the second circular polarization film 122 to pass or isolates the linear polarization component converted by the second circular polarization film 122 from passing in accordance with a state of the power.

That is, the liquid crystal unit 124 may apply or isolate the voltage since the liquid crystal unit 124 is electrically connected to a driving device of the 3D display apparatus.

Unlike the related art liquid crystal unit attached with a linear polarization plate, the liquid crystal unit 124 of the 3D glasses does not include other linear polarization films. Further, the liquid crystal unit 124 and the second circular polarization film do not include other linear polarization films therebetween.

The difference between the rubbing direction of the liquid crystal unit 124 and an optical axis of the second circular polarization film 122 may be substantially 45 degrees. This is to allow the linear polarization component, that passes through the liquid crystal unit in accordance with the state of the power of the liquid crystal unit, to pass or convert to a linear polarization component having an opposite direction thereto.

The liquid crystal unit 124 may apply the power alternately to the left eye side or the right eye side of the 3D glasses in accordance with the left eye image or the right eye image of the 3D image, and may operate in synchronization with the 3D panel 110.

Alternatively, the liquid crystal unit 124 may continuously apply the voltage to only one side of the left eye side or the right eye side of the 3D glasses while the other side of the 3D glasses may be not applied with the voltage.

In the active manner, for example, the left eye image or the right eye image may be passed or isolated by activating or inactivating the power of the liquid crystal unit of the left eye side or the right eye side of the 3D glasses in accordance with the left eye image or the right eye image. Unlike the active manner requiring the operation in synchronization with the 3D panel, in the passive manner, the voltage may be applied to only one liquid crystal unit of the left eye side or the right eye side of the 3D glasses, while the other side of the 3D glasses may be not supplied with the power.

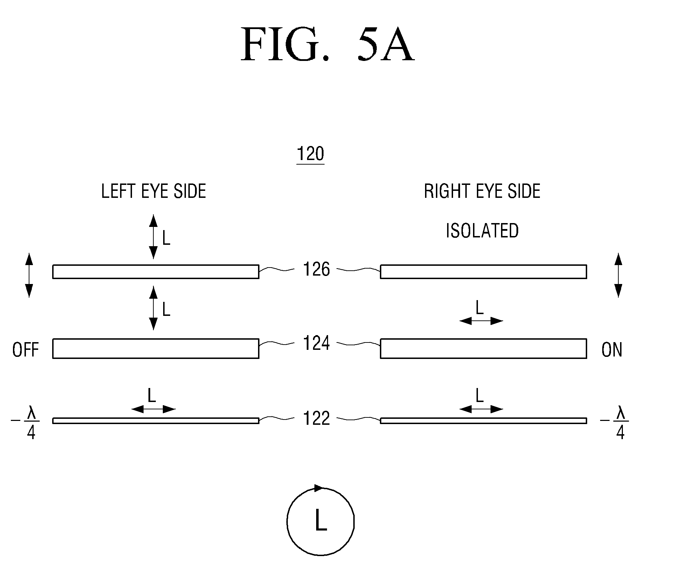

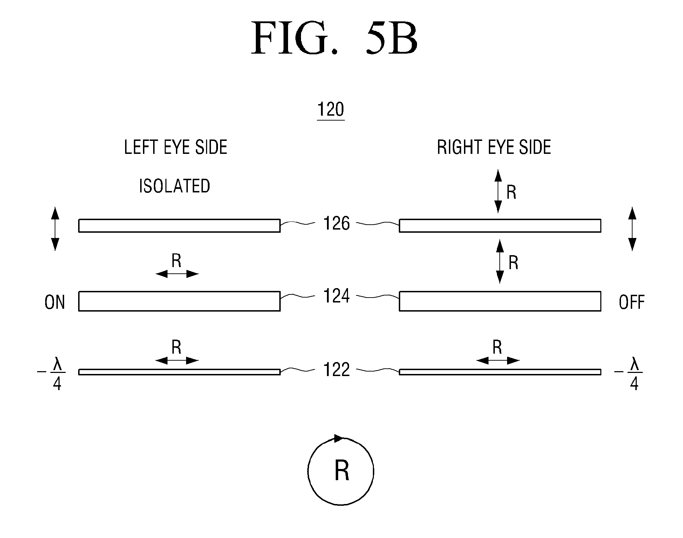

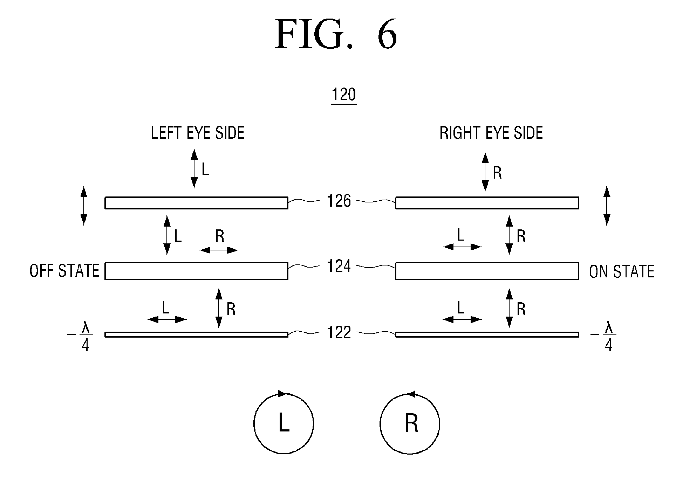

The operation of the 3D display apparatus in the active manner will be described with reference to FIGS. 5A and 5B, and the operation of the 3D display apparatus in the passive manner will be described with reference to FIG. 6.

The linear polarization plate 126 either allows the linear polarization component or isolates the linear polarization component from passing in accordance with the direction of the linear polarization component passed through the liquid crystal unit 124.

In other words, if the linear polarization plate 126 allows only the horizontal linear polarization component to pass, only the image of the horizontal component is passed. If the linear polarization plate 126 allows only the vertical linear polarization component to pass, only the image of the vertical component is passed.

The linear polarization plate 126 may be a horizontal linear polarization plate. According to an exemplary embodiment, the second circular polarization film 122 may be provided instead of a vertical linear polarization plate attached where the second circular polarization film 122 would be located in the 3D glasses of the related art active manner.

In FIG. 4, the 3D glasses 120 are separately illustrated with a second circular polarization film 122, a liquid crystal unit 124, and a linear polarization plate 126. However, those skilled in the art would understand that the second circular polarization film and the linear polarization plate may be attached at the front and back sides of the liquid crystal unit.

FIGS. 5A and 5B illustrate an operation of a 3D display apparatus in the active manner according to an exemplary embodiment of FIG. 1.

As shown in FIG. 5A, when the left eye image having a clockwise circular polarization component passes through the second circular polarization film 122, both the left eye side and the right eye side of the 3D glasses 120 are converted to horizontal linear polarization components. If the power of the liquid crystal unit 124 on the left eye side of the 3D glasses is inactivated (e.g., OFF) and the power of the liquid crystal unit 124 on the right eye side of the 3D glasses is activated (e.g., ON), the horizontal linear polarization component is converted to a vertical linear polarization component after passing through the liquid crystal unit 124 of the left eye side of the 3D glasses, and the horizontal linear polarization component passes through the liquid crystal unit 124 without any variation of the direction thereof on the right eye side of the 3D glasses. Also, if the linear polarization plate 126 is designed to allow only the vertical linear polarization component to pass, only the linear polarization component on the left eye side among the linear polarization components passed through the liquid crystal 124 on the left eye side and the right eye side passes through the linear polarization plate 126 and is displayed on the left eye side of the viewer.

As shown in FIG. 5B, when the right eye image having a clockwise circular polarization component passes through the second circular polarization film 122, both the left eye side and the right eye side of the 3D glasses 120 are converted to horizontal linear polarization components. If the power of the liquid crystal unit 124 on the left eye side of the 3D glasses is activated (e.g., ON) and the power of the liquid crystal unit 124 on the right eye side of the 3D glasses is inactivated (e.g., OFF), the horizontal linear polarization component passes through the liquid crystal unit 124 without any variation of the direction thereof on the left eye side of the 3D glasses, and the horizontal linear polarization component is converted to a vertical linear polarization component after passing through the liquid crystal unit 124 of the right eye side of the 3D glasses. Also, if the linear polarization plate 126 is designed to allow only the vertical linear polarization component to pass, only the linear polarization component on the right eye side among the linear polarization components passed through the liquid crystal 124 on the left eye side and the right eye side passes through the linear polarization plate 126 and is displayed on the right eye side of the viewer.

When the 3D display apparatus according to an exemplary embodiment is operated in an active manner, the power of the liquid crystal unit of the 3D glasses is activated or inactivated in synchronization with the left eye image or the right eye image displayed on the 3D panel, thereby enabling the viewer to watch the 3D image.

FIG. 6 illustrates an operation of a 3D display apparatus in the passive manner according to an exemplary embodiment of FIG. 1.

When the left eye image having a clockwise circular polarization component and the right eye image having a counterclockwise circular polarization component pass through the second circular polarization film 122, the left eye image is converted to a horizontal linear polarization while the right eye image is converted to a vertical linear polarization. Here, the power of the left eye side of the 3D glasses 120 remains as the OFF state, and the power of the right eye side remains as the ON state. When the left eye image and the right eye image passed through the second circular polarization film 122 pass through the liquid crystal unit 124 of the left eye side of the 3D glasses 120, the left eye image is converted to a vertical linear polarization component and the right eye image is converted to a horizontal linear polarization component. Also, when passing through the liquid crystal unit 124 of the right eye side of the 3D glasses 120, the left eye image remains as the horizontal linear polarization component and the right eye image remains as the vertical linear polarization component.

If the linear polarization plate 126 allows only the vertical linear polarization component to pass, the left eye side of the 3D glasses 120 is displayed with only a left eye image having a vertical linear polarization component, and the right eye side of the 3D glasses 120 is displayed with only a right eye image having a vertical linear polarization component among the linear polarization components passed through the liquid crystal unit 124 on the left eye side and the right eye side.

Accordingly, when the 3D display apparatus is operated in a passive manner, the power is applied only to one side of the left eye side or the right eye side of the 3D glasses without a need of applying the power to the liquid crystal unit 124 of the 3D glasses in synchronization with the left eye image or the right eye image displayed on the 3D panel, thereby enabling the viewer to watch the 3D image.

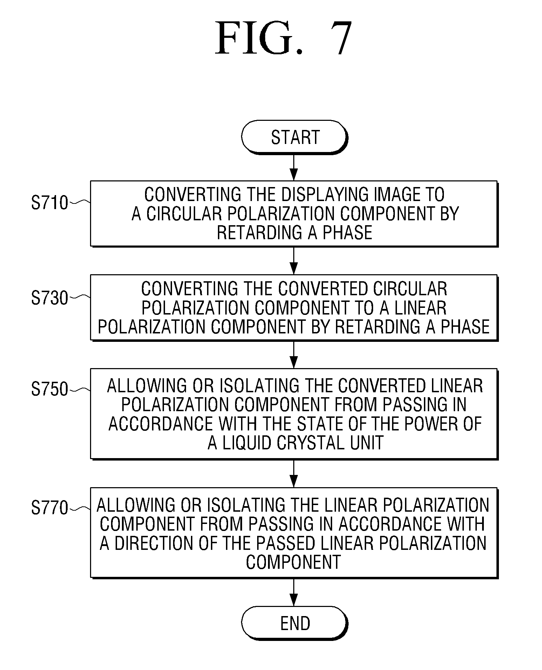

FIG. 7 is a flowchart depicting a method for controlling a 3D display apparatus according to an exemplary embodiment.

The first circular polarization film attached to the front side of the 3D panel converts an image displayed on the 3D panel to a circular polarization component by retarding a phase (S710).

In the active manner, the first circular polarization film 112 which converts the 3D image to the circular polarization component by retarding a phase is attached to the front side of the 3D panel through which the left eye image and the right eye image are alternately displayed. The first circular polarization film 112 may be a circular polarization film inducing phase retardation of λ/4.

In other words, in the active manner, the left eye image or the right eye image displayed on the 3D panel passes through the first circular polarization film 112 and then is converted to a left eye image or a right eye image having a circular polarization component in the same direction.

In the passive manner, the first circular polarization film 112 which converts the 3D images to the circular polarization components having an opposite direction to each other by retarding a phase is attached to the front side of the 3D panel through which the left eye image and the right eye image are displayed to be spatially separated. The first circular polarization film 112 used in the passive manner may be a patterned circular polarization film for retarding a phase of the spatially separated left eye image and the right eye image.

The patterned circular polarization film may be patterned by a circular polarization film inducing phase retardation of +λ/4 or a circular polarization film inducing phase retardation of -λ/4 in accordance with the left eye image or the right eye image.

In the passive manner, for example, if the left eye image displayed on the 3D panel is converted to a circular polarization component after passing through the circular polarization film which retards a phase by +λ/4, the right eye image is converted to a circular polarization component after passing through the circular polarization film which retards a phase by -λ/4.

In other words, the circular polarization components of the left eye image and the right eye image are the circular polarization components having an opposite directional components to each other.

Next, the second circular polarization film 122 of 3D glasses converts the converted circular polarization component to a linear polarization component by retarding a phase (S730).

The first circular polarization film 112 may be a circular polarization film that induces phase retardation of λ/4, and the second circular polarization film 122 may be a circular polarization film that induces phase retardation of -λ/4.

In other words, in the active manner, the left eye image or the right eye image passed through the first circular polarization film, and the second circular polarization film is converted to an image having the same linear polarization component as the component of an image initially displayed on the 3D panel. In the passive manner, the left eye image or the right eye image passed through the second circular polarization film 122 is converted to a linear polarization component opposed in direction from each other.

The difference between an optical axis of the first circular polarization film 112 and an optical axis of the second circular polarization film 122 may be substantially 90 degrees.

The liquid crystal unit 124 of the 3D glasses allows the converted linear polarization component to pass or isolates the converted linear polarization component from passing in accordance with the state of the power (S750). That is, the liquid crystal unit 124 may apply or isolate the voltage since the liquid crystal unit is electrically connected to a driving device of the 3D display apparatus.

The difference between the rubbing direction of the liquid crystal unit and an optical axis of the second circular polarization film may be substantially 45 degrees. This difference may allow the linear polarization component, which passes through the liquid crystal unit in accordance with the state of the power of the liquid crystal unit, to pass through or convert to a linear polarization component having an opposite direction thereto.

The liquid crystal unit according to an exemplary embodiment may apply the power alternately to the left eye side or the right eye side of the 3D glasses in accordance with the left eye image or the right eye image of the 3D image and operate in synchronization with the 3D panel.

The liquid crystal unit according to another exemplary embodiment may continuously apply the voltage to only one side of the left eye side or the right eye side of the 3D glasses, while voltage is not applied to the other side of the 3D glasses.

In the active manner, for example, the left eye image or the right eye image may be passed or isolated by activating or inactivating the power of the liquid crystal unit 124 of the left eye side or the right eye side of the 3D glasses in accordance with the left eye image or the right eye image. Unlike the active manner requiring the operation in synchronization with the 3D panel, the voltage may be applied to only one liquid crystal unit 124 of the left eye side or the right eye side of the 3D glasses, while the other side of the 3D glasses may be not supplied with the power.

Then, the linear polarization plate of the 3D glasses allows the linear polarization component to pass or isolates the linear polarization component from passing in accordance with a direction of the passed linear polarization component (S770).

In other words, if the linear polarization plate is designed to allow only the horizontal linear polarization component, the image of the horizontal component is passed, whereas if the linear polarization plate is designed to allow only the vertical linear polarization component, the image of the vertical component is passed.

As would be apparent to one skilled in the art, based on the foregoing, according to the method for controlling a 3D display apparatus according to exemplary embodiments, the viewer may watch the 3D images via a pair of 3D glasses, regardless of the manner of display of the 3D images such as an active manner or a passive manner.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

## Claims

1. A three-dimensional (3D) display apparatus, comprising:
a 3D panel which displays a 3D image;
a first circular polarization film which is attached to a front side of the 3D panel and converts the 3D image to a circular polarization component by retarding a phase; and
3D glasses for watching the 3D image,
wherein the 3D glasses comprise,
a second circular polarization film which converts the circular polarization component converted by the first circular polarization film to a linear polarization component by retarding a phase,
a liquid crystal unit which allows the linear polarization component to pass or isolates the linear polarization component converted by the second circular polarization film from passing in accordance with the state of the power, and
a linear polarization plate which allows the linear polarization component to pass or isolates the linear polarization component from passing in accordance with a direction of the linear polarization component passed through the liquid crystal unit.

2. The apparatus as claimed in claim 1, wherein the first circular polarization film induces phase retardation of +λ/4, and the second circular polarization film induces phase retardation of -λ/4.

3. The apparatus as claimed in claim 1 or claim 2, wherein a difference between an optical axis of the first circular polarization film and an optical axis of the second circular polarization film is 90 degrees.

4. The apparatus as claimed in anyone of claims 1 to 3, wherein a difference between a rubbing direction of the liquid crystal unit and an optical axis of the second circular polarization film is 45 degrees.

5. The apparatus as claimed in anyone of claims 1 to 4, wherein the liquid crystal unit operates in synchronization with the 3D panel and supplies the power alternately to the left eye side or the right eye side of the 3D glasses in accordance with the left eye image or the right eye image of the 3D image.

6. The apparatus as claimed in anyone of claims 1 to 5, wherein the first circular polarization film is a patterned circular polarization film.

7. The apparatus as claimed in anyone of claims 1 to 6, wherein the liquid crystal unit continuously applies a voltage to only one of the left eye side or the right eye side of the 3D glasses while voltage is not applied to the other of the left eye side or the right eye side.

8. The apparatus as claimed in anyone of claims 1 to 7, wherein the linear polarization plate is a horizontal linear polarization plate.

9. The apparatus as claimed in anyone of claims 1 to 8, wherein the 3D glasses do not include any other linear polarization plate than said linear polarization plate.

10. A method for controlling a 3D display apparatus, comprising:
converting an image displayed through a 3D panel to a circular polarization component by retarding a phase using a first circular polarization film attached to a front side of the 3D panel;
converting the converted circular polarization component to a linear polarization component by retarding a phase using a second circular polarization film of 3D glasses;
allowing the linear polarization component to pass or isolating the converted linear polarization component from passing in accordance with the state of the power using a liquid crystal unit of the 3D glasses; and
allowing the linear polarization component to pass or isolating the linear polarization component from passing in accordance with a direction of the passed linear polarization component using a linear polarization plate of the 3D glasses.

11. The method as claimed in claim 10, wherein the first circular polarization film induces phase retardation of +λ/4, and the second circular polarization film induces phase retardation of -λ/4.

12. The method as claimed in claim 10 or claim 11, wherein the allowing the linear polarization component to pass or the isolating the linear polarization component from passing is **characterized in that** the liquid crystal unit operates in synchronization with the 3D panel and supplies the power alternately to a left eye side or a right eye side of the 3D glasses in accordance with a left eye image or a right eye image of the 3D image.

13. The method as claimed in anyone of claims 10 to 12, wherein the allowing the linear polarization component to pass or the isolating the linear polarization component from passing is **characterized in that** the liquid crystal unit continuously applies a voltage to only side of the left eye side or the right eye side of the 3D glasses, while voltage is not applied to the other side of the left eye side or the right eye side.
